# EUROPEAN PATENT APPLICATION

(11) **EP 0 609 615 A1**
(43) Date of publication of application: **10.08.1994**
(21) Application number: 93309420.3
(22) Date of filing: 25.11.1993
(51) Int. Cl.: G06F 3/12

(54) **Computer printer controller**

(30) Priority: 02.02.1993 US 12239
(71) Applicant: COMTECH IT PTE LIMITED, Singapore (SG)
(72) Inventor: Chiu, Andrew, Kowloon (HK)
(74) Representative: Johnson, Terence Leslie

(57) **Abstract**

A computer (1) printer controller (13) eleminates the requirement for memory and separate processing controls in the printer (9). The controller 913) is connectable through conventional interfacing and controls printer functions according to computer commands. The controller (13) indicates operation of a printer function and disables further computer commands during the operation of the printer function. The controller also indicates when the printer is able to accept and carry out computer commands at the printer.

## Description

### FIELD OF THE INVENTION

The present invention relates to printer controller which eliminates the requirement for memory and separate processing controls in a computer printer.

### BACKGROUND OF THE INVENTION

According to conventional computer and printer setups such as a personal computer, the computer itself comprises a central controller including a central processing unit as well as a certain amount of memory. This typically includes both permanent or read only memory commonly referred to as ROM and temporary or random access memory commonly referred to as RAM.

A typical computer printer which receives code from the computer also includes a central processing unit and a certain amount of ROM and RAM. The central processing unit of the printer is connected to a printer driver which controls operation of the actual printer mechanism.

The duplication of central processing controls and memory in the printer is required because the printer itself is no where near capable of operating at the speeds at which the computer is able to send coded information to the printer. Therefore, the printer must include means for storing and retrieving coded information for operation of the printer at a time delayed substantially from the time that it receives the coded information.

By way of example, information can be manipulated within and transferred from a standard personal computer at the rate of about 16 MHz. However, the speed at which the actual print mechanism of a standard personal computer can operate is in the order of about 1.2 kHz. Therefore, the printing mechanism of the printer is over one thousand times slower than the computer itself. Therefore, in order to have an effective communication between the computer and the printer, it is important with conventional computer and printer setups that the transmitted coded information be stored in the printer until such time as it can be printed out at the much slower 1.2 kHz rate. Therefore, with conventional printers there is a requirement for storage and later processing of the coded information at the printer which makes the conventional printer a relatively expensive item, particularly in comparison to smaller personal type computers.

### SUMMARY OF THE INVENTION

The present invention relates to a computer printer controller which eliminates the requirement for memory and separate processing controls in the computer printer. This controller enables the manufacturing of a relatively inexpensive printer particularly useful for personal computers.

The computer controller of the present invention is readily adaptable for use with existing computers in that the controller is connectable through conventional interface means to the computer. The controller allows the elimination of memory and central processing at the printer itself because the controller includes means for controlling printer functions according to computer commands, means for indicating operation of a printer function and disabling further computer commands during the operation of the printer function and means for indicating when the printer is able to accept and carry out any further computer commands. Accordingly, the computer is aware through the controller when the printer is in operation when the controller does not allow information to be passed from the computer to the printer. This eliminates the need for memory at the printer. The controller then acknowledges to the computer when the printer is free and allows further information to be passed from the computer to the printer.

The printer controller of the present invention enables the manufacturing of low cost printers particularly applicable for use with personal computers.

### BRIEF DESCRIPTION OF THE DRAWINGS

The above as well as other advantages and features of the present invention will be described in greater detail according to the preferred embodiments of the present invention in which;
Figure 1 is a schematic view of a computer interfaced with a printer controller in accordance with a preferred embodiment of the present invention;
Figure 2 is a further schematic view of the printer controller and printer of Figure 1;
Figure 3 is a schematic view of the pin configuration from the printer controller of Figure 2;
Figure 4 is a chart showing a preferred embodiment command set for the printer controller of Figures 1 through 3.

### DETAILED DESCRIPTION ACCORDING TO THE PREFERRED EMBODIMENTS OF THE PRESENT INVENTION

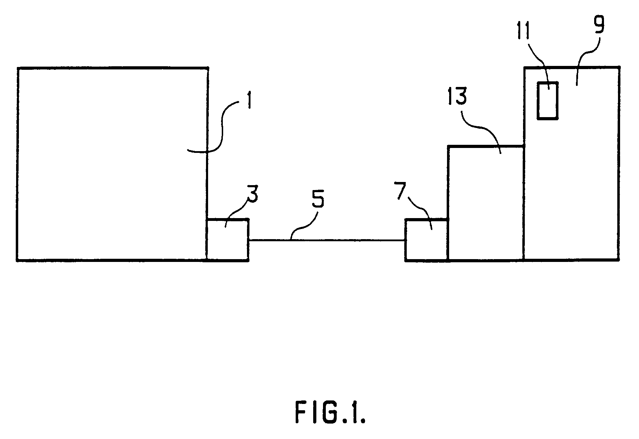

Figure 1 shows a computer generally indicated at 1 and a printer generally indicated at 9. Computer 1 has a conventional construction including the standard memory and central processing unit. Printer 9 on the other hand is substantially different from conventional printers in that it does not include any memory whatsoever and rather than having a central processor which operates using conventional printer memory, printer 9 includes a novel controller generally indicated at 13. Controller 13 eliminates the requirement for memory and memory processing within printer 9.

A complete description of controller 13 will be provided later in detail, however at this point, it is to be noted that processor 13 is connected through standard interface protocol with computer 1. The computer includes a conventional interface port 3 and controller 13 includes its own interface port 7. Ports 3 and 7 are connected by a standard parallel interface cable 5. This is an important feature of the present invention in that the printer controller 13 is driven by software directly from the computer through its parallel port. Hence the printer is adapted to receive information from the computer in the same manner as it would be received by a conventional printer.

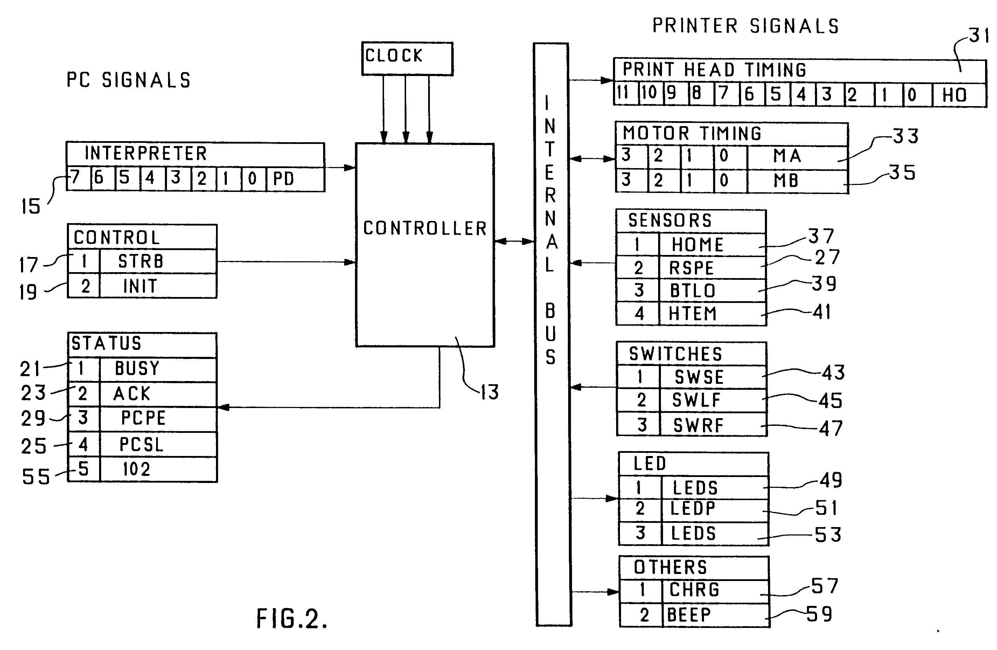

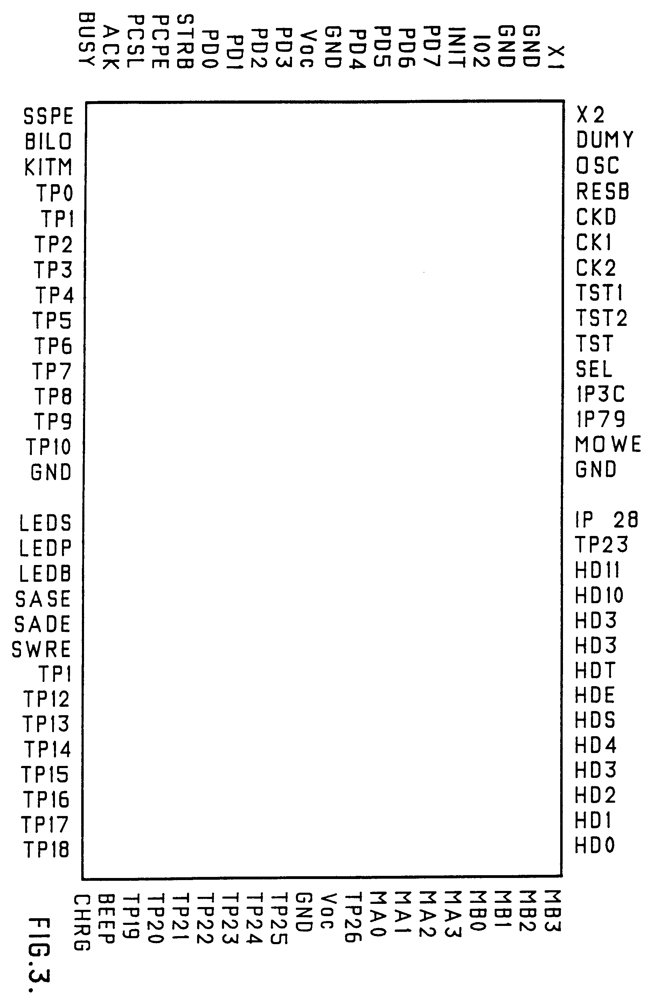

Controller 13 is in the form of a chip having a series of pins which are active and inactive to pass information between the computer and the printer. Figure 2 of the drawings shows specific pin functions whereas Figure 3 of the drawings shows a specific pin configuration on the controller chip.

From a very broad standpoint, the controller chip of the present invention passes commands in the form of coded information from the computer to the printer. The printer then functions to carry out the command. However, the printer function is carried out in slow motion relative to the time it takes to pass further commands from the computer to the printer and since the printer does not have any memory, the controller reports back to the computer that the printer is busy and disables any further commands from being sent to the printer while the function is being carried out. As soon as the specific function is completed at the printer, the controller acknowledges to the computer that the printer has completed its task and is now available to receive further commands from the computer. The controller then allows a further command to be passed from the computer to the printer at which point, the controller again disables any further commands until the printer is once again freed up.

Figure 2 shows different blocks of control pins. A block of pins 15 constitutes the data bus from the computer to pass data from the computer to the printer. These pins are given the designation PD o through 7 on the actual control chip and depending upon the value of the data, different commands are interpreted and executed by the printer. Specific printer data pins are described below.

Pin block 17 identifies what is referred to as the strobe pin. This pin is given the designation STRB on the control chip and provides signals used when transferring commands and data through the printer data pins PD 0 through 7.

Block 17 identifies an initialize printer pin. This pin has the designation INIT on the chip. It causes the controller to go through an initializing sequence. However, the initializing sequence will not occur if the printer is busy.

Pin block 21 identifies the busy pin and has the designation BUSY on the control chip. When a command is accepted by the controller and passed to the printer to carry out the command, the busy pin prevents further command from being transferred from the computer to the printer.

Pin block 23 identifies what is referred to as an acknowledgement pin having the designation ACK on the control chip. When the printer is not busy, the acknowledgement is asserted for a very short time, i.e. in the order of 3.75 micro seconds which identifies to the computer that the printer is available to receive a command.

Pin block 25 identifies what is referred to as a PC select pin having the designation PCSL on the chip. This pin puts the printer in a select or on-line state with the computer. This pin in combination with pins in block 49, identified as a LEDS, indicate which state the controller is in.

Pin block 27 is a paper sense pin having the designation SSPE on the chip. This pin must be connected to a sensor to detect whether or not there is paper in the printer carriage. However, even when this pin is activated, printing is still allowed and ensures that a second pass printing of a two pass high density print mode is not interrupted.

Pin block 29 identifies a paper out pin which is activated when there is no paper in the printer. This pin is given the designation PCPE on the chip.

Pin block 31 identifies a series of print head command pins. These pins have the designation HD 0 through 11 on the chip. As seen in Figure 1, the printer has an actual print head 11. This print head is preferably an HP ink jet print head operating using the 12 pins HD 0 through 11. All of the necessary timing of the firing of these pins is provided by way commands from the computer which are then handled by control chip 13 to operate the ink jet print head.

Pin block 33 identifies print head motor pins having the designation MA 0 through 3 on the chip. These pins output a waveform that controls the print head stepper motor for operation of the print head.

Pin block 35 identifies paper feed motor pins having the designation MD 0 through 3 on the chip. These pins output a waveform that controls the paper feed steper motor.

Pin block 37 identifies what is referred to as a home sense pin having the designation HOME on the control chip. The home position is at the extreme left printable position of the printer unit. Whenever the print head passes by this position, the home pin is activated. During printing for example, the home pin must be activated so that the controller will know when to start printing.

Pin block 39 is a battery low sense pin indicated by the designation BTLO on the chip. If batteries are used instead of an AC power adaptor after some time, the voltage that is supplied to the motor may not be sufficient to drive the motors. The battery low sense pin indicates to the controller that the batteries are running low.

Pin block 41 is a high temperature sense pin having a designation HTEM on the chip. This pin operates to stop the battery charging process when an abnormally high temperature is detected in the battery compartment.

Pin blocks 43, 45 and 47 represent different switch pins. Specifically pin block 43 identifies the select switch pin having the designation SWSE on the chip. This pin when activated causes toggling of the select or on-line state. Pin block 45 is a line feed switch pin having the designation SWLF. This pin when activated turns on the paper feed motor to feed the paper in the normal direction during the non-selected state. It is ignored if the controller is in the selected state.

Pin block 47 identifies the reverse feed switch pin having the designation SWRF on the chip. This pin when activated turns on the paper feed motor to feed the paper in the reverse direction during the non-selected state. It is ignored if the controller is in the select state.

Pin blocks 49, 51 and 53 identify various different LED pins. Specifically block 49 indicates what is referred to as a select LED pin which, as earlier described, indicates the select or on-line condition of the printer. This pin should be connected to a light emitting diode and is identified by the designation LEDS on the chip.

Pin block 51 is paper out LED pin having the designation LEDP on the chip. When activated, this pin indicates that the printer is out of paper, It again is connected to a light emitting diode.

Pin block 53 is the battery low LED pin. It has the designation LEDB on the chip and indicates a battery low state when activated. Again, this pin is preferably connected to a light emitting diode.

Pin block 57 is a charge enable pin and has the designation CHRG on the chip. This pin, when activated, enables charging of the batteries. In the preferred embodiment the charge is held for 14 hours or until the select switch and reverse feed switch pins are activated. If the strobe pin is toggled during charging the charge pin will temporarily go inactive until a set time of, for example, 4 seconds following toggling of the strobe pin to the inactive state.

Pin block 59 indicates a sound beep pin having the designation BEEP on the chip. This pin is meant for an auditory feedback to the printer user and is used to connect to a buzzer or a sound chip. It is activated by sending a command through one of the printer data pins PD 0 through 7.

Pin block 55 having the designation 102 on the chip is an output pin which is toggled between active and inactive every time the select switch and line forward switch pins are activated. The output pin is provided for a facsimile expansion module.

Further pins, which are not shown in Figure 2, are however shown in the pin configuration of Figure 3. These particular pins include a reset pin having the designation RESB. This pin provides overall reset of the controller. When it is activated, all of the flip flops in the controller are cleared to zero. When the reset pin is taken from the active to the inactive state, the initialization sequence is started automatically.

Also provided are test pins having the designation TST 1 and 2. When these pins are activated they speed up certain portions of the controller. This allows a thorough testing of the controller without incurring a substantial amount of time.

A pin referred to as an external oscillator pin having the designation OSC is an external clock input pin for testing purposes. Also provided are further test pins having designations TP 0 through 30 and these pins are connected to various internal nodes of the controller. They are used during factory testing to verify the controller circuitry.

Pins having the designation X1 and X2 are connected to a crystal or resonator to drive the internal clock generator.

A dumy pin having the designation DUMY is tied to ground.

A select test pin having the designation SEL allows the selection of which set of test pins are to be outputted through the test pins TP 14 through 25.

As earlier described, printer controller 13 uses standard parallel interface protocol. From the description of the pin activities above, it is to be understood that data 0 through data 7 and the strobe line are driven by the computer whereas the busy and acknowledge lines are driven by the printer.

In a parallel interface protocol eight bits of data are sent at a time. The strobe pin is toggled on and then off at which point the busy pin toggles on to indicate that the printer is processing the data. The strobe can not be toggled when the busy is activated and busy only goes inactive when the printer is free and therefore ready to accept further data. When busy goes inactive, the acknowledge pin is activated momentarily to indicate to the computer that the printer is ready to accept further data.

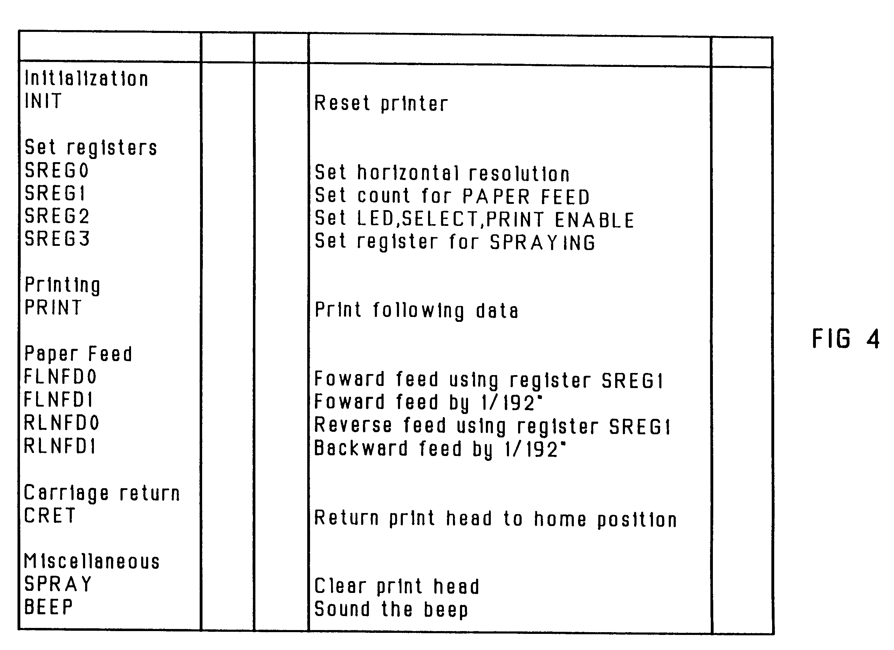

Figure 4 shows thirteen commands in the printer command set. These commands are divided into six groups as follows;
INITIALIZATION; When the initialization command is sent to the printer the following occurs. The print head moves towards the right and then towards the left until the HOME sensor is detected. This establishes the left most position for the print head, also referred to HOME position. Next, the paper feed motor moves backwards and forwards to ensure that the paper is free to move.

All the internal registers of the printer are reset to zero.

If there is no paper in the carriage the paper out LED flashes and the paper out signal goes active. If there is paper, the on-line LED is activated.

Register SREG0 is used to set horizontal resolution of the print head.

Register SREG1 is used to set count for the paper feed which determines the separation between lines on the paper.

Register SREG2 sets the LEDS, the select or on-line status of the printer and further puts the printer in a print enable mode.

Register SREG3 sets the register for print spray.

PRINTING: The print command simply dictates the data that will be printed at the printer. The print command is always terminated by a carriage return which returns the print head to the home position.

The vertical distance between adjacent pins on the print head is 1/96". However, a vertical resolution of 192 DPI is achievable by using two passes to print one line. After the first pass is printed, the paper feed command as described below moves the paper up by 1/192" then the second pass can be printed.

PAPERFEED: There are four commands that control the feeding of paper through the printer. Commands FLNFD0 and FLNFD1 are used for feeding the paper forward and commands RLNFD0 and RLNFD1 are corresponding commands to feed the paper in the reverse direction.

CARRIAGE RETURN: As earlier described the CRET command is used to return the print head to the HOME position after each line of printing. It will not do anything if the print head is already in the HOME position.

SPRAY AND BEEP: The SPRAY and BEEP commands are not usually sent during normal operation of the printer. SPRAY can be used together with the SREG3 register to clear a clogged print head. BEEP is used to make a sound to alert the user as earlier described.

Although various preferred embodiments of the present invention have been described herein in detail, it will be appreciated by those skilled in the art, that variations may be made thereto without departing from the spirit of the invention or the scope of the appended claims.

## Claims

1. A computer printer controller which eliminates the requirement for memory and separate processing controls in the printer, said controller being connectable through conventional interface means to the computer and comprising means for controlling printer functions according to computer commands, means for indicating operation of a printer function and disabling further computer commands during the operation of the printer function and means for indicating when he printer is able to accept and carry out the further computer commands.

2. A computer printer controller as claimed in Claim 1, connectable with the computer by a conventional parallel interface and having a parallel port with and being driven by software from the computer.

3. A computer printer controller as claimed in Claim 1, wherein said controller provides control for operation of an ink jet print head at the printer.

4. A computer printer controller as claimed in Claim 3, wherein said printer controller controls timing for accurate but firing and column positioning of the ink jet printer.

5. A computer printer controller as claimed in Claim 3, wherein said controller provides control for motor operation of the ink jet printer.

6. A computer printer controller as claimed in Claim 1, wherein said controller outputs printer status information.

7. A computer printer controller as claimed in Claim 6, wherein said controller outputs paper supply information from the printer.

8. A computer printer controller as claimed in Claim 6, wherein said controller outputs information as to printer portable battery status.

9. A computer printer as claimed in Claim 1, wherein said controller includes a connection for connecting said controller to means for testing operation of said controller.
